# EUROPÄISCHE PATENTSCHRIFT

(11) **EP 3 154 043 B1**
(45) Veröffentlichungstag und Bekanntmachung des Hinweises auf die Patenterteilung: **13.01.2021**
(21) Anmeldenummer: 15188589.4
(22) Anmeldetag: 06.10.2015
(51) Int. Cl.: G08G 1/0967, G08G 1/0962, G01C 21/36, G08G 1/0965

(54) **VERFAHREN UND SYSTEM ZUM BEREITSTELLEN VON INFORMATIONEN IM UMFELD EINER KREUZUNG**
METHOD AND SYSTEM FOR PROVIDING INFORMATION ABOUT THE SURROUNDINGS OF A CROSSING
PROCEDE ET SYSTEME DE PREPARATION D'INFORMATIONS DANS L'ENVIRONNEMENT D'UN CROISEMENT

(43) Veröffentlichungstag der Anmeldung: 12.04.2017
(73) Patentinhaber: Volkswagen Aktiengesellschaft, 38440 Wolfsburg (DE)
(72) Erfinder: Poppe, Dr. Holger, 38114 Braunschweig (DE); Kranke, Florian, 38102 Braunschweig (DE); Werneke, Dr. Julia, 38102 Braunschweig (DE); Semmler, Carsten, 38162 Cremlingen (DE)

(56) Entgegenhaltungen:
- EP-A2- 1 526 493
- EP-A2- 1 628 276
- US-A1- 2004 128 062
- US-A1- 2005 273 256
- US-A1- 2013 191 020

## Beschreibung

Die vorliegende Erfindung betrifft ein Verfahren zum Bereitstellen von Informationen in einem Fahrzeug zu einer Verkehrssituation im Umfeld einer Kreuzung mit mindestens einer Lichtsignalanlage, auf die mehrere Fahrstreifen zuführen. Des Weiteren betrifft die Erfindung ein System zum Bereitstellen von solchen Informationen in einem Fahrzeug.

In modernen Fahrzeugen gewinnen Fahrerassistenzsysteme zur Verbesserung der Sicherheit und des Fahrkomforts stetig an Bedeutung. Unter einem Fahrerassistenzsystem wird eine Einrichtung eines Fahrzeugs verstanden, welche den Fahrer beim Führen des Fahrzeugs unterstützt. Solche Fahrerassistenzsysteme können zum einen Informationen bereitstellen, welche es dem Fahrer erleichtern, die Fahraufgabe zu bewältigen. Zum anderen können Fahrerassistenzsysteme auch aktiv Fahrfunktionen des Fahrzeugs übernehmen oder in die Bewegung des Fahrzeugs eingreifen.

Im Zuge der Weiterentwicklung von Fahrerassistenzsystemen wird der Einsatzbereich auf urbane Räume ausgedehnt, für die komplexere Verkehrssituationen als beispielsweise auf einer Autobahn typisch sind. Ein wesentliches Element der Verkehrsregelung in urbanen Räumen ist die Lichtsignalanlage, die umgangssprachlich auch als Ampel bezeichnet wird. Solche Lichtsignalanlagen regeln unter anderem den Verkehr beim Überfahren von Kreuzungen. Kreuzungen mit Lichtsignalanlagen sind im urbanen Raum Engstellen für den Verkehrsfluss. Sie bestimmen maßgeblich über die Verkehrsqualität und die Emissionen des Verkehrs in der Stadt. Herkömmlicherweise kann ein Fahrer, der sich einer Kreuzung mit einer Lichtsignalanlage nähert, nur auf für ihn optisch sichtbare Informationen reagieren. Es besteht daher ein Bedürfnis, dem Fahrer zur Verkehrssituation im Umfeld des Fahrzeugs Informationen bereitzustellen.

Aus der Veröffentlichung Daniel Burgstahler, Matthias Pelzer, Andreas Lotzy, Fabian Knapp, Hongjun Puy, Tobias Rueckelt und Ralf Steinmetz: "A concept for a C2X-based Crossroads Assistant". In: Proceedings of the 2nd IEEE PerCom Workshop on Smart Environments: Closing the Loop (SmartE 2015), IEEE, März 2015 ist ein Verfahren zum Bereitstellen von Informationen im Umfeld einer Kreuzung mit einer Lichtsignalanlage bekannt, bei dem Daten zur Topografie der Kreuzung und Daten über die Signalphase der Lichtsignalanlage über eine Car-to-X-Kommunikation an das Fahrzeug übertragen werden. Aus diesen Daten wird dann eine Anzeige generiert, welche über eine farbliche Kodierung die Phasen der Lichtsignalanlage für einzelne Fahrstreifen anzeigt. Auf diese Weise kann der Fahrer erkennen, ob er bei seiner derzeitigen Geschwindigkeit noch bei der aktuellen Phase der Lichtsignalanlage die Kreuzung passieren kann oder, wenn dies nicht der Fall ist, ob er, wenn er auf die aktuelle Höchstgeschwindigkeit beschleunigen würde, noch innerhalb dieser Phase die Kreuzung passieren könnte.

Aus der DE 10 2006 005 022 B3 und der DE 10 2008 037 690 A1 sind Verfahren bekannt, bei welchen dem Fahrer im Bereich der Kreuzung Informationen zur Fahrtroute eines Einsatzfahrzeugs bereitgestellt werden. EP 1526493 A2 beschreibt ein Verfahren zur fahrzeugseitigen Verkehrsinformationsanzeige, bei dem Lichtsignalanlagen an Kreuzungsbereichen als effektive Engstellen erkannt werden.

Der vorliegenden Erfindung liegt die Aufgabe zugrunde, ein Verfahren und ein System der eingangs genannten Art bereitzustellen, mit welchen verbesserte Informationen in dem Fahrzeug zur Verkehrssituation im Umfeld der Kreuzung bereitgestellt werden können. Die Informationen sollen es dem Fahrer insbesondere erleichtern, einen geeigneten Fahrstreifen vor der Kreuzung auszuwählen, welcher auf die Kreuzung zuführt.

Erfindungsgemäß wird diese Aufgabe durch ein Verfahren mit den Merkmalen des Anspruchs 1 und ein System mit den Merkmalen des Anspruchs 14 gelöst. Vorteilhafte Ausgestaltungen und Weiterbildungen ergeben sich aus den abhängigen Ansprüchen.

Demgemäß werden bei dem erfindungsgemäßen Verfahren erste Daten zu Schaltzeitpunkten der Lichtsignalanlage von dem Fahrzeug ermittelt. Ferner werden zweite Daten zur Verkehrssituation auf den Fahrstreifen im Umfeld der Kreuzung von dem Fahrzeug ermittelt. In Abhängigkeit von den ermittelten ersten und zweiten Daten werden Grafikdaten erzeugt und in dem Fahrzeug angezeigt, welche die Länge eines Staus vor der Lichtsignalanlage in Fahrtrichtung des Fahrzeugs separat für die Fahrstreifen und den aktuellen Status der Lichtsignalanlage für die Fahrstreifen darstellen.

Die ersten und/oder zweiten Daten können beispielsweise von Sensoren des Fahrzeugs selbst ermittelt werden. Beispielsweise können fahrzeugeigene Bilderfassungssensoren, wie beispielsweise eine oder mehrere Kameras, Bilder im Umfeld der Kreuzung aufnehmen. Diese Bilder werden dann ausgewertet, um die Daten, insbesondere die ersten Daten, zu ermitteln. Bevorzugt werden die ersten und zweiten Daten jedoch über eine Kommunikationseinheit von einer externen Infrastruktur, insbesondere von einer Kommunikationseinheit der Lichtsignalanlage, an das Fahrzeug übertragen.

Bei dem erfindungsgemäßen Verfahren können Informationen von geographischen Karten, von fahrzeuginternen und fahrzeugexternen Sensoren sowie von Daten, die über eine Infrastrukturzu-Fahrzeug-Kommunikation übertragen wurden, zu einem gesamtheitlichen Überblick über das Umfeld der Kreuzung fusioniert und dem Fahrer im Fahrzeug angezeigt werden.

Unter den Schaltzeitpunkten der Lichtsignalanlage wird in dieser Schrift eine Änderung des Status der Lichtsignalanlage verstanden. Die Lichtsignalanlage weist insbesondere zwei Zustände auf, nämlich einen ersten Zustand, bei dem das Passieren der Kreuzung auf dem entsprechenden Fahrstreifen erlaubt ist, und einen zweiten Zustand, bei dem ein solches Passieren auf dem Fahrstreifen nicht erlaubt ist. Des Weiteren kann die Lichtsignalanlage noch einen oder mehrere Übergangszustände aufweisen, welche angezeigt werden, wenn die Lichtsignalanlage zwischen den beiden eingangs erläuterten Zuständen wechselt. In dieser Schrift wird insbesondere zwischen diesen beiden eingangs erläuterten Zuständen unterschieden, bei denen die Lichtsignalanlage üblicherweise ein rotes bzw. ein grünes Signal anzeigt.

Der Zustand der Lichtsignalanlage kann für alle Fahrstreifen durch ein einziges Element angezeigt werden. Unterscheidet sich jedoch der Verlauf für die Fahrstreifen hinter der Kreuzung und gibt es einzelne Unterlichtsignalanlagen für unterschiedliche Fahrstreifen, so kann der Zustand der Lichtsignalanlage getrennt für die verschiedenen Unterlichtsignalanlagen für die einzelnen Fahrstreifen dargestellt werden. Dabei können jedoch diejenigen Fahrstreifen zusammengefasst werden, die auf dieselbe Straße hinter der Kreuzung münden. So kann es separate Unterlichtsignalanlagen für eine Geradeausfahrt, für ein Linksabbiegen und ein Rechtsabbiegen geben.

Unter einem Stau wird in dieser Schrift verstanden, dass die Fahrzeugdichte auf einem Fahrstreifen einen Grenzwert überschritten hat und/oder die mittlere oder maximale Geschwindigkeit der Fahrzeuge auf einem Fahrstreifen einen Grenzwert unterschritten hat. Insbesondere stehen die Fahrzeuge im Bereich des Staus und der Abstand zwischen den einzelnen Fahrzeugen ist unterhalb eines Grenzwerts.

Bei dem erfindungsgemäßen Verfahren wird dem Fahrer vorteilhafterweise ein Stau separat für einzelne Fahrstreifen angezeigt, welche auf die Kreuzung zuführen. Diese Anzeige wird im Fahrzeug auf Basis von Daten erzeugt, welche die aktuelle Verkehrssituation auf den Fahrstreifen im Umfeld der Kreuzung wiedergeben. Der Fahrer kann auf diese Weise sehr einfach entscheiden, welches der beste Fahrstreifen ist, um in die gewünschte Richtung die Kreuzung zu passieren.

Gemäß einer Weiterbildung des erfindungsgemäßen Verfahrens wird in Abhängigkeit von der aktuellen Position und Fahrtrichtung des Fahrzeugs relativ zur Lichtsignalanlage im Umfeld der Kreuzung bestimmt, welche Fahrstreifen von dem Fahrzeug befahren werden dürfen. Von den Grafikdaten werden dann ausschließlich die Fahrstreifen dargestellt, welche das Fahrzeug befahren darf. Die aktuelle Position und Fahrtrichtung des Fahrzeugs wird beispielsweise mittels eines Navigationssystems des Fahrzeugs bestimmt. Alternativ kann dies auch durch eine Datenkommunikation mit einer Kommunikationseinheit der Lichtsignalanlage bestimmt werden. Fahrstreifen, welche das Fahrzeug nicht befahren darf, sind beispielsweise die Fahrstreifen der Gegenrichtung. Solche Fahrstreifen werden von den Grafikdaten nicht dargestellt. Hierdurch ist es für den Fahrer leichter, die komplexe Verkehrssituation im Bereich der Kreuzung schnell zu erfassen. Dabei werden nur die für den Fahrer des Fahrzeugs relevanten Informationen wiedergegeben.

Gemäß einer weiteren Ausgestaltung des erfindungsgemäßen Verfahrens umfassen die zweiten Daten zur Verkehrssituation auf den Fahrstreifen im Umfeld der Kreuzung dritte Daten zu anderen Fahrzeugen, die sich zwischen der Position des Fahrzeugs und der Lichtsignalanlage befinden. Aus den ersten Daten zu den Schaltzeitpunkten der Lichtsignalanlage und den dritten Daten zu anderen Fahrzeugen wird dann die Anzahl der Durchfahrtsperioden der Lichtsignalanlage berechnet, die erforderlich ist, bis das Fahrzeug die Lichtsignalanlage voraussichtlich passieren kann. Diese berechnete Anzahl der Durchfahrtsperioden wird mittels der Grafikdaten angezeigt. Dabei umfassen die Grafikdaten zur Länge des Staus vor der Lichtsignalanlage für die Fahrstreifen die Daten zur Information über die Anzahl der Durchfahrtsperioden der Lichtsignalanlage separat für die Fahrstreifen. Auf diese Weise kann der Fahrer insbesondere separat für die Fahrstreifen schnell erfassen, wie viele Zustandswechsel der Lichtsignalanlage erforderlich sind, bis er die Kreuzung passieren kann. Vorteilhafterweise kann der Fahrer dann einfach und schnell den Fahrstreifen für das Passieren der Kreuzung wählen, bei welchem er die Kreuzung am schnellsten passieren kann.

Die dritten Daten zu den anderen Fahrzeugen, die sich zwischen der Position des Fahrzeugs und der Lichtsignalanlage befinden, können z. B. durch einen Sensor, wie einer Kamera, des Fahrzeugs und eine anschließende Auswertung der aufgenommenen Bilder erzeugt werden. Bevorzugt sind jedoch bei den Fahrstreifen Sensoren vorgesehen, welche die Positionen der Fahrzeuge und deren Geschwindigkeiten auf den Fahrstreifen vor der Lichtsignalanlage erfassen. Diese erfassten Daten können dann direkt oder bereits ausgewertet an das Fahrzeug übertragen werden.

Bevorzugt wird für die Länge des Staus vor der Lichtsignalanlage für zumindest einen Fahrstreifen, bevorzugt für alle Fahrstreifen, berechnet, welche Fahrzeuge auf diesem Fahrstreifen innerhalb derselben Durchfahrtsperiode die Lichtsignalanlage voraussichtlich passieren. Insbesondere erfolgt eine Anzeige, welche diese Fahrzeuge für einen Fahrstreifen, bevorzugt für alle Fahrstreifen, kenntlich macht. Diese Berechnung und Anzeige veranschaulicht noch deutlicher die Verkehrssituation im Umfeld der Kreuzung. Vorteilhafterweise erleichtert diese Anzeige wiederum die Auswahl eines geeigneten Fahrstreifens.

Gemäß einer Weiterbildung des erfindungsgemäßen Verfahrens erfolgt die Berechnung, welche Fahrzeuge auf einem Fahrstreifen innerhalb derselben Durchfahrtsperiode die Lichtsignalanlage voraussichtlich passieren, in Abhängigkeit von den Schaltzeitpunkten der Lichtsignalanlage für diesen Fahrstreifen und von einer prognostizierten Abflussgeschwindigkeit der Fahrzeuge auf diesem Fahrstreifen, wenn die Lichtsignalanlage die Durchfahrt freigegeben hat. Die Prognose wird insbesondere von einer Einrichtung im Fahrzeug durchgeführt. Auf diese Weise kann die Genauigkeit der Berechnung und Anzeige der Fahrzeuge, welche derselben Durchfahrtsperiode zugeordnet sind, erhöht werden.

Die Länge des Staus vor der Lichtsignalanlage wird beispielsweise für die Fahrstreifen durch jeweils einen Markierungsstreifen dargestellt. Auf dem Markierungsstreifen werden Abschnitte angezeigt, in denen Fahrzeuge des jeweiligen Fahrstreifens innerhalb derselben Durchfahrtsperiode die Lichtsignalanlage voraussichtlich passieren. Vorteilhafterweise stellen die Abschnitte sehr intuitiv erfassbar die Bereiche dar, in denen Fahrzeuge innerhalb derselben Durchfahrtsperiode die Lichtsignalanlage voraussichtlich passieren.

Der Fahrer kann auf diese Weise die voraussichtliche Wartezeit bei der Kreuzung abschätzen. Dies führt vorteilhafterweise zu einer gleichmäßigeren Auslastung der Fahrstreifen, welche die Kreuzung passieren. Dies führt somit zu einer Verbesserung der Verkehrseffizienz an Kreuzungen sowie zu einer Minimierung der verkehrsbedingten Emissionen im urbanen Raum.

Gemäß einer Weiterbildung des erfindungsgemäßen Verfahrens umfassen die Grafikdaten eine Darstellung des Zeitintervalls bis zum Wechsel des Zustands der Lichtsignalanlage. Diese Darstellung erfolgt bevorzugt direkt neben der Darstellung des Zustands der Lichtsignalanlage. Dieser Darstellung kann der Fahrer vorteilhafterweise entnehmen, wie lange es dauert, bis die Lichtsignalanlage den Zustand wechselt. Das Zeitintervall wird dabei aus den ermittelten ersten Daten zu den Schaltzeitpunkten der Lichtsignalanlage berechnet.

Gemäß einer Weiterbildung des erfindungsgemäßen Verfahrens wird die Position des Fahrzeugs relativ zu einer Haltelinie der Lichtsignalanlage und zu dem Beginn eines Staus auf einem Fahrstreifen vor der Lichtsignalanlage berechnet und mittels der Grafikdaten angezeigt. Auf diese Weise kann der Fahrer seine Position relativ zu dem Beginn eines Staus und der Haltelinie der Lichtsignalanlage schnell und einfach abschätzen.

Gemäß der Erfindung wird erfasst, auf welchem Fahrstreifen sich das Fahrzeug befindet. Wenn der Abstand des Fahrzeugs von dem Beginn eines Staus in Fahrtrichtung des Fahrzeugs auf einem der Fahrstreifen oder auf dem Fahrstreifen, auf dem sich das Fahrzeug befindet, einen ersten Grenzwert unterschritten hat, heben die Grafikdaten zur Länge des Staus vor der Lichtsignalanlage denjenigen Fahrstreifen hervor, auf welchem sich das Fahrzeug befindet. Der Fahrer kann auf diese Weise, noch bevor er den Stau erreicht hat, abschätzen, ob er den Fahrstreifen wechseln soll. Wenn er den Fahrstreifen wechseln will, bleibt noch ausreichend Zeit, dieses Fahrmanöver durchzuführen. Hierdurch wird vorteilhafterweise die Möglichkeit einer geeigneten Wahl des Fahrstreifens zum Passieren der Kreuzung verbessert.

Gemäß einer Weiterbildung des erfindungsgemäßen Verfahrens umfassen die ermittelten zweiten Daten Informationen zum Verlauf der einzelnen Fahrstreifen und zu der Verkehrssituation auf den einzelnen Fahrstreifen hinter der Lichtsignalanlage bezüglich der Fahrtrichtung des Fahrzeugs. Die Grafikdaten umfassen dann den Verlauf der einzelnen Fahrstreifen und die Verkehrssituation auf den einzelnen Fahrstreifen hinter der Lichtsignalanlage bezüglich der Fahrtrichtung des Fahrzeugs. Vorteilhafterweise werden in diesem Fall nicht nur Informationen zum Umfeld der Kreuzung vor der Lichtsignalanlage in Fahrtrichtung des Fahrzeugs sondern auch im Umfeld der Kreuzung hinter der Lichtsignalanlage bezüglich der Fahrtrichtung des Fahrzeugs ermittelt und angezeigt. Auf diese Weise kann der Fahrer noch besser einen geeigneten Fahrstreifen zum Passieren der Kreuzung ermitteln. Wenn der Verkehr nämlich im Abflussbereich der Kreuzung nur mit geringer Geschwindigkeit abfließt, ist der Fahrstreifen, welcher in diesen Bereich mündet, selbst dann nachteilig, wenn sich vor der Lichtsignalanlage noch kein Stau gebildet hat.

Insbesondere wird ein Stau und/oder die Fahrzeugdichte auf den einzelnen Fahrstreifen hinter der Lichtsignalanlage bezüglich der Fahrtrichtung des Fahrzeugs erfasst und dargestellt. Des Weiteren kann ein Hindernis auf einem der Fahrstreifen hinter der Lichtsignalanlage bezüglich der Fahrtrichtung des Fahrzeugs erfasst und dargestellt werden. Diese Informationsanzeige vermittelt dem Fahrer einfach und genau die Verkehrssituation, welche auf der Kreuzung oder nach dem Passieren der Kreuzung auf den einzelnen Fahrstreifen relevant ist.

Neben quantitativen Informationen in Fahrtrichtung vor der Haltelinie der Lichtsignalanlage erhält der Fahrer damit weitere qualitative Informationen für den Bereich hinter der Haltelinie der Lichtsignalanlage, d. h. auf der Kreuzung bzw. hinter der Kreuzung bezüglich der Fahrtrichtung des Fahrzeugs.

Gemäß einer Weiterbildung des erfindungsgemäßen Verfahrens wird eine geografische Karte mit der Position des Fahrzeugs angezeigt. Es kann sich hierbei um die übliche Anzeige eines Navigationssystems des Fahrzeugs handeln. Ferner wird bei dieser Ausgestaltung eine Annäherung des Fahrzeugs an die Lichtsignalanlage detektiert. Die Grafikdaten werden dann zusätzlich zu der geografischen Karte in einem separaten Anzeigebereich wiedergegeben, wenn der Abstand des Fahrzeugs von der Haltelinie der Lichtsignalanlage und/oder von dem Beginn eines Staus auf einem der Fahrstreifen einen zweiten Grenzwert unterschritten hat. Es wird somit ein so genannter Splitscreen angezeigt, wenn sich das Fahrzeug der Haltelinie der Lichtsignalanlage oder dem Beginn eines Staus auf einem Fahrstreifen bis auf eine bestimmte Entfernung angenähert hat. Auf diese Weise kann der Fahrer seine Position im Straßennetz weiterhin auf an sich bekannte Weise wie im Navigationssystem üblicherweise dargestellt erkennen. Gleichzeitig wird ihm jedoch in dem separaten Anzeigebereich die aktuelle Verkehrssituation im Umfeld der Kreuzung angezeigt. Vorteilhafterweise erleichtert diese Darstellung es dem Fahrer, sich bei der komplexen Verkehrssituation im Bereich der Kreuzung zu orientieren.

Gemäß einer Weiterbildung des erfindungsgemäßen Verfahrens werden vierte Daten zu einer Fahrtroute eines vorfahrtsberechtigten Einsatzfahrzeugs empfangen. Es werden dann weitere Grafikdaten in Abhängigkeit von der empfangenen Fahrtroute des Einsatzfahrzeugs erzeugt und im Fahrzeug angezeigt, welche die Fahrtroute des Einsatzfahrzeugs im Bereich der Kreuzung darstellen, wenn die empfangene Fahrtroute des Einsatzfahrzeugs die Kreuzung passiert. Auf diese Weise kann der Fahrer des Fahrzeugs schnell und intuitiv erkennen, dass er die Kreuzung nicht passieren darf, obwohl die Lichtsignalanlage eine Durchfahrt erlaubt. Gleichermaßen kann der Fahrer des Fahrzeugs schnell erfassen, wenn das Einsatzfahrzeug zwar die Kreuzung passiert, es jedoch keinen Konflikt mit der geplanten Fahrtroute des Fahrzeugs gibt.

Das erfindungsgemäße System zum Bereitstellen von Informationen in einem Fahrzeug zu einer Verkehrssituation im Umfeld einer Kreuzung mit mindestens einer Lichtsignalanlage, auf die mehrere Fahrstreifen zuführen, umfasst eine Ermittlungseinheit des Fahrzeugs zum Ermitteln von ersten Daten zu Schaltzeitpunkten der Lichtsignalanlage und von zweiten Daten zur Verkehrssituation auf den Fahrstreifen im Umfeld der Kreuzung. Ferner umfasst das System eine mit der Ermittlungseinheit verbundene Steuervorrichtung, mit welcher in Abhängigkeit von den ermittelten ersten und zweiten Daten Grafikdaten erzeugbar sind, welche die Länge eines Staus vor der Lichtsignalanlage in Fahrtrichtung des Fahrzeugs separat für die Fahrstreifen und den aktuellen Status der Lichtsignalanlage für die Fahrstreifen umfassen. Des Weiteren weist das System eine mit der Steuervorrichtung verbundene Anzeigevorrichtung zum Anzeigen der Grafikdaten im Fahrzeug auf.

Das erfindungsgemäße System ist insbesondere ausgebildet, das vorstehend beschriebene Verfahren vollständig oder teilweise durchzuführen. Es weist somit auch dieselben Vorteile auf.

Die Anzeigevorrichtung kann auf an sich bekannte Weise im Kombiinstrument des Fahrzeugs oder in der Mittelkonsole angeordnet sein. Ferner kann es sich bei der Anzeigevorrichtung um ein so genanntes Head-up-Display handeln. Das erfindungsgemäße Verfahren bietet dem Fahrer damit vorteilhafterweise eine bessere Unterstützung im Stadtverkehr, um die oftmals kurzen Entscheidungsintervalle durch die Bereitstellung von Informationen im Umfeld der Kreuzung besser nutzen zu können.

Die Erfindung wird nun anhand eines Ausführungsbeispiels mit Bezug zu den Zeichnungen erläutert.
- Figur 1: zeigt schematisch ein Fahrzeug eines Ausführungsbeispiels des erfindungsgemäßen Systems und zum Durchführen des Ausführungsbeispiels des erfindungsgemäßen Verfahrens,
- Figur 2: zeigt schematisch die Kreuzung, in deren Umfeld das erfindungsgemäße Verfahren ausgeführt und das erfindungsgemäße System eingesetzt wird,
- Figur 3: zeigt schematisch die Verkehrssituation auf einem Fahrstreifen vor einer Lichtsignalanlage der Kreuzung,
- die Figur 4: zeigt eine Anzeige, die von einem Ausführungsbeispiel des erfindungsgemäßen Verfahrens erzeugt wird,
- die Figuren 5a bis 5c: zeigen aufeinanderfolgende Anzeigen, die von dem Ausführungsbeispiel des erfindungsgemäßen Verfahrens erzeugt werden,
- die Figur 6: zeigt eine weitere Anzeige, die von dem Ausführungsbeispiel des erfindungsgemäßen Verfahrens erzeugt wird,
- Figur 7: zeigt eine Anzeige, die von dem Ausführungsbeispiel des erfindungsgemäßen Verfahrens bei einer weiteren Verkehrssituation erzeugt wird, und
- die Figuren 8a bis 8c: zeigen Anzeigen, die von dem Ausführungsbeispiel des erfindungsgemäßen Verfahrens erzeugt werden, wenn Daten zu einem vorfahrtsberechtigten Einsatzfahrzeug empfangen worden sind.

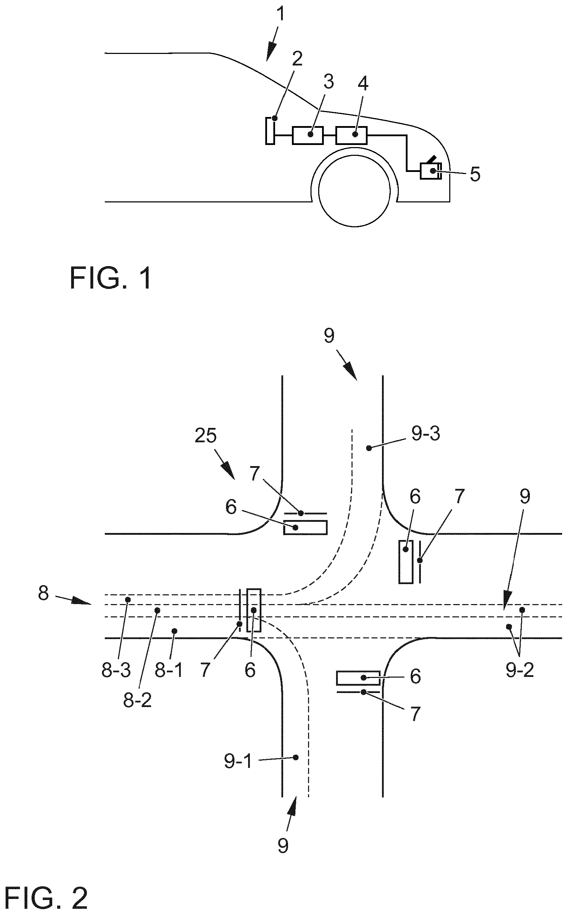

Mit Bezug zu den Figuren 1 bis 3 wird ein Ausführungsbeispiel des erfindungsgemäßen Systems beschrieben:
Das erfindungsgemäße System umfasst Einrichtungen in einem Fahrzeug 1 sowie Einrichtungen in der Infrastruktur einer Kreuzung 25. In Figur 1 sind die Einrichtungen in dem Fahrzeug 1 gezeigt. Es umfasst eine an sich bekannte Anzeigevorrichtung 2, welche mit einer Ermittlungseinheit 4 verbunden ist. Die Ermittlungseinheit 4 ist wiederum mit einer Kommunikationseinheit 5 verbunden, welche eine Empfangseinheit zum drahtlosen Empfang von Daten umfasst.

Wie in Figur 2 gezeigt, umfasst die Kreuzung 25 eine Lichtsignalanlage 6. Die Lichtsignalanlage 6 weist als Ampeln ausgebildete Unterlichtsignalanlagen für die in die Kreuzung 25 mündenden Fahrstreifen 8 auf. Diese Ampeln geben für die einzelnen Fahrstreifen 6 Lichtsignale aus, welche die Verkehrsteilnehmer darüber informieren, ob sie eine Haltelinie 7 überfahren dürfen, um die Kreuzung zu passieren, oder ob sie an der Haltelinie 7 auf eine Zustandsänderung der Ampel warten müssen. In Figur 2 sind nur die Fahrstreifen einer Straße 8 gezeigt, welche von links auf die Kreuzung 25 zuführt. Auf dieser Straße gibt es drei Fahrstreifen 8-1, 8-2 und 8-3. Der Fahrstreifen 8-1 ist dabei für Fahrzeuge vorgesehen, welche entweder geradeaus weiterfahren oder nach rechts bei der Kreuzung 25 abbiegen. Hinter der Kreuzung 25 setzt sich somit der Fahrstreifen 8-1 bei den Fahrstreifen 9-1 oder 9-2 fort. Die Lichtsignalanlage 6 umfasst für diesen Fahrstreifen 8-1 eine Unterlichtsignalanlage, d. h. eine separate Ampel, welche signalisiert, ob ein auf dem Fahrstreifen 8-1 befindliches Fahrzeug 1 nach rechts abbiegen darf. Der Fahrstreifen 8-2 ist für Fahrzeuge 1 vorgesehen, welche bei der Kreuzung 25 geradeaus fahren wollen, so dass sich dieser Fahrstreifen 8-2 hinter der Kreuzung bei dem Fahrstreifen 9-2 fortsetzt. Auch für diesen Fahrstreifen 8-2 ist eine separate Unterlichtsignalanlage, d. h. eine Ampel, vorgesehen, welche signalisiert, ob eine Geradeausfahrt aktuell erlaubt oder verboten ist. Der Fahrstreifen 8-3 ist für Fahrzeuge 1 vorgesehen, welche bei der Kreuzung 25 links abbiegen wollen. Der Fahrstreifen 8-3 setzt sich somit hinter der Kreuzung 25 bei dem Fahrstreifen 9-3 fort. Auch für diesen Fahrstreifen 8-3 ist eine separate Unterlichtsignalanlage, d. h. eine Ampel, vorgesehen. Die bezüglich der Fahrtrichtung eines Fahrzeugs 1 hinter der Lichtsignalanlage 6 verlaufenden Fahrstreifen werden allgemein auch mit dem Bezugszeichen 9 bezeichnet.

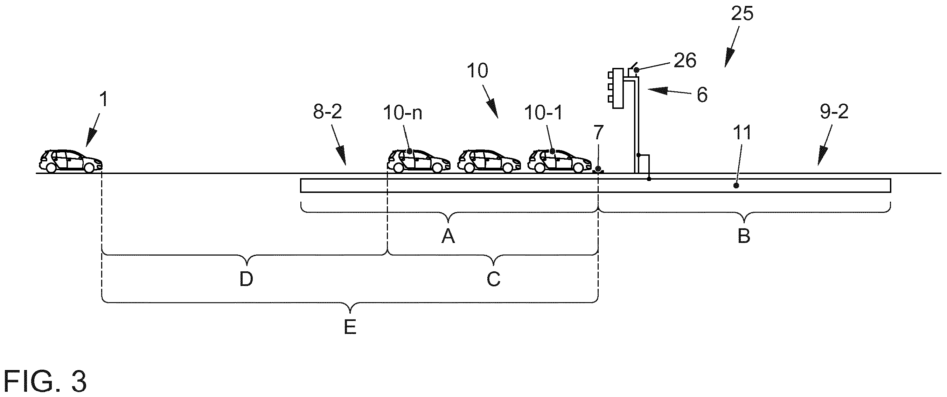

Wie in Figur 3 gezeigt, umfasst die Lichtsignalanlage 6 eine weitere Kommunikationseinheit 26, welche eine Sendeeinheit zum drahtlosen Übertragen von Daten an Fahrzeuge 1 aufweist, die sich in einem bestimmten Umgebungsbereich der Kreuzung 25 befinden. Die Kommunikationseinheit 26 ist mit der Schaltelektronik der Lichtsignalanlage 6 gekoppelt. Auf diese Weise können über die Kommunikationseinheit 26 Daten zum aktuellen Zustand der Lichtsignalanlage 6, d. h. ob für einen bestimmten Fahrstreifen 8 aktuell die Durchfahrt erlaubt oder verboten ist, an die Fahrzeuge 1 übertragen werden. Des Weiteren können Daten an die Fahrzeuge 1 übertragen werden, welche angeben, wie lange es noch dauert, bis sich der Zustand der Lichtsignalanlage 6 für einen bestimmten Fahrstreifen 8 ändert.

Des Weiteren ist unterhalb der auf die Kreuzung 25 zuführenden Fahrstreifen 8 und unter den von der Kreuzung 25 weg führenden Fahrstreifen 9 eine Sensoreinrichtung 11 angeordnet, welche eine Vielzahl von Sensoren umfasst. Mittels der Sensoreinrichtung 11 kann für den Bereich A vor der Kreuzung 25 und für den Bereich B hinter der Kreuzung 25 erfasst werden, wo sich andere Fahrzeuge 10 in diesen Bereichen A und B vor und hinter der Kreuzung 25 befinden und wie groß die Geschwindigkeit dieser anderen Fahrzeuge 10 ist. Des Weiteren kann gegebenenfalls noch der Abstand zwischen zwei anderen Fahrzeugen 10 erfasst werden. Die von der Sensoreinrichtung 11 erfassten Daten werden an die Lichtsignalanlage 6 übertragen, welche diese Daten unverarbeitet oder verarbeitet über die Kommunikationseinheit 26 an die Kommunikationseinheit 5 eines Fahrzeugs 1 übertragen kann, welches sich außerhalb des Bereichs A vor der Kreuzung 25 befindet. Aus den Daten der Sensoreinrichtung 11 kann eine Ermittlungseinheit der Lichtsignalanlage 6 oder die Ermittlungseinheit 4 des Fahrzeugs 1 die Verkehrssituation auf den Fahrstreifen 8 und den Fahrstreifen 9 im Umfeld der Kreuzung 25 ermitteln. Des Weiteren kann ermittelt werden, dass im Bereich C vor der Haltelinie 7 auf z. B. dem Fahrstreifen 8-2 ein Stau aus den anderen Fahrzeugen 10-1 bis 10-n besteht.

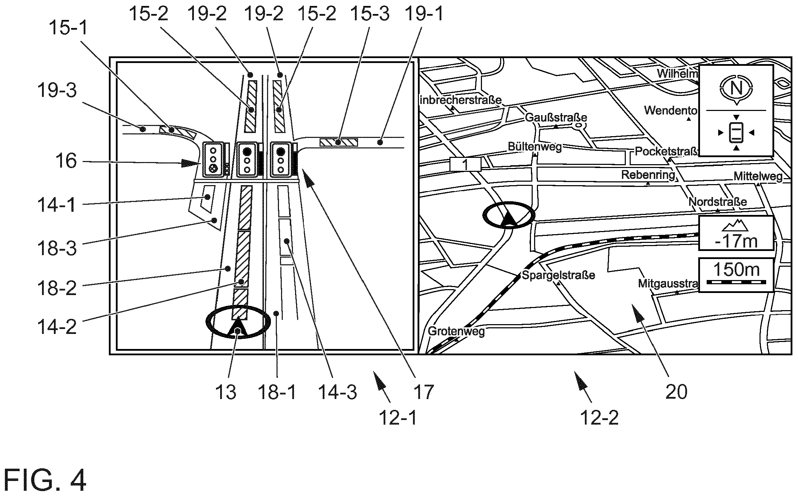

Mit Bezug zu den Figuren 4 bis 8 wird ein Ausführungsbeispiel des erfindungsgemäßen Verfahrens sowie weitere Details und Ausgestaltungen des Ausführungsbeispiels des erfindungsgemäßen Systems erläutert:
Von der Lichtsignalanlage 6 werden über die Kommunikationseinheit 26 permanent bzw. innerhalb kurzer Zeitintervalle erste Daten zu Schaltzeitpunkten der Lichtsignalanlage 6 ausgesandt. Diese ersten Daten können die Schaltzeitpunkte der Lichtsignalanlage 6 separat für verschiedene Unterlichtsignalanlagen für einzelne Fahrstreifen 8 enthalten, welche in Fahrstreifen 9 unterschiedlicher Richtung fortgeführt werden. Des Weiteren umfassen die ersten Daten den aktuellen Zustand der Lichtsignalanlage 6 bzw. der zugehörigen Unterlichtsignalanlagen. Des Weiteren werden zweite Daten zur Verkehrssituation auf den Fahrstreifen 8 und 9 im Umfeld der Kreuzung 25 mittels der Kommunikationseinheit 26 der Lichtsignalanlage 6 ausgesandt. Die Datenübertragung erfolgt drahtlos, beispielsweise über Wi-Fi, insbesondere in einem Standard, der für die drahtlose Datenübertragung zwischen Infrastruktureinrichtungen und sich bewegenden Fahrzeugen optimiert ist. Die Daten können des Weiteren eine Kennung enthalten, welche die Kreuzung 25 bzw. die Lichtsignalanlage 6 kennzeichnet. Die Reichweite der drahtlosen Datenübertragung mittels der Kommunikationseinheit 26 an eine Kommunikationseinheit 5 eines Fahrzeugs 1 ist größer als der Bereich A, innerhalb dem andere Fahrzeuge 10 vor der Lichtsignalanlage 6 erfasst werden, und auch größer sein als der Bereich C, in welchem sich üblicherweise ein Stau vor der Lichtsignalanlage 6 bildet. Die Reichweite kann beispielsweise über 50 m, insbesondere über 100 m, liegen.

In dem Fahrzeug 1 wird von der Anzeigevorrichtung 2 auf an sich bekannte Weise eine geographische Karte 20 des Navigationssystems des Fahrzeugs 1 angezeigt, in welcher die Position des Fahrzeugs 1 innerhalb der geographischen Karte 20 kenntlich gemacht ist. Wenn der Abstand des Fahrzeugs 1 von der Haltelinie 7 der Lichtsignalanlage 6 oder der Abstand des Fahrzeugs 1 von dem Beginn des Staus auf einem der Fahrstreifen 8, welcher auf die Lichtsignalanlage 6 zuführt, einen Grenzwert unterschreitet, wird die von der Steuervorrichtung 3 erzeugte Anzeige auf der Anzeigevorrichtung 2 wie in Figur 4 gezeigt verändert: Es wird ein so genannter Splitscreen angezeigt, welcher auf der rechten Seite weiterhin einen Anzeigebereich 12-2 mit der geographischen Karte 20 wiedergibt. Für den linken Bereich werden von der Steuervorrichtung 3 jedoch Grafikdaten erzeugt, welche dem Fahrer des Fahrzeugs 1 in einem Anzeigebereich 12-1 Informationen zur Verkehrssituation im Umfeld der Kreuzung 25 geben.

Details dieser Informationsanzeige werden im Folgenden erläutert:
Mit Bezug zu Figur 4 werden zunächst die verschiedenen Elemente der erzeugten Grafikdaten, die von der Anzeigevorrichtung 2 im Anzeigebereich 12-1 angezeigt werden, erläutert. Die Lichtsignalanlage 6 bzw. die Unterlichtsignalanlagen, welche von der Lichtsignalanlage 6 umfasst sind, werden anhand von Grafikelementen 16 dargestellt, welche Ampeln darstellen. Neben den jeweiligen Grafikelementen 16 wird ein Grafikelement 17 angezeigt, welches mittels eines Balkens und einer Farbcodierungen anzeigt, wie lange es noch dauert, bis die Lichtsignalanlage 6 bzw. die Unterlichtsignalanlage ihren Zustand verändert, d. h. bis die Ampel von grün auf rot oder von rot auf grün umspringt. Die Position des eigenen Fahrzeugs 1 wird mittels eines Grafikelements 13 relativ zu den anderen Grafikelementen und deren Entsprechungen in der realen Welt dargestellt.

Die Fahrstreifen 8-1 bis 8-3 werden in dem Anzeigebereich 12-1 anhand der grafischen Elemente 18-1 bis 18-3 dargestellt. Gleichermaßen werden die Fahrstreifen 9-1 bis 9-3 in dem Anzeigebereich 12-1 anhand der Grafikelemente 19-1 bis 19-3 dargestellt.

Aus der Darstellung im Anzeigebereich 12-1 der Figur 4 ist außerdem ersichtlich, dass nur die Fahrstreifen 8 und 9 vor bzw. hinter der Lichtsignalanlage 6 anhand der Grafikelemente 18 und 19 dargestellt werden, die von dem Fahrzeug 1 befahren werden dürfen. Diese Fahrstreifen 8 und 9 werden von der Ermittlungseinheit 4 des Fahrzeugs bestimmt, bevor die Grafikdaten für die Darstellung auf der Anzeigevorrichtung 2 erzeugt werden. Fahrstreifen der Gegenfahrbahn werden beispielsweise bei der von dem erfindungsgemäßen Verfahren erzeugten Anzeige nicht dargestellt.

Auf den grafischen Elementen 18-1 bis 18-3 der Fahrstreifen 8-1 bis 8-3 werden zusätzlich Markierungsstreifen 14-1, 14-2 und 14-3 wiedergegeben. Die Markierungsstreifen 14-1 bis 14-3 zeigen die Länge eines Staus vor der Lichtsignalanlage 6 in Fahrtrichtung des Fahrzeugs 1 separat für die Fahrstreifen 8-1 bis 8-3 an. Anhand der Position des Grafikelements 13 für das Fahrzeug 1 und der Markierungsstreifen 14-1 bis 14-3 sowie der Position des Grafikelements 16 für die Lichtsignalanlage 6 kann der Fahrer des Fahrzeugs 1 die Position des Fahrzeugs 1 relativ zu einem Stau, welcher durch andere Fahrzeuge 10-1 bis 10-n vor der Lichtsignalanlage 6 verursacht wird, und relativ zur Haltelinie 7 der Lichtsignalanlage 6 erkennen.

Es ist außerdem im Anzeigebereich 12-1 der Figur 4 erkennbar, dass die Markierungsstreifen 14-2 und 14-3 in Abschnitte unterteilt sind. Die Länge der Abschnitte ist so gewählt, dass andere Fahrzeuge 10-1 bis 10-n, die sich in dem entsprechenden Abschnitt auf dem jeweiligen Fahrstreifen 8-2 bzw. 8-3 befinden, innerhalb derselben Durchfahrtsperiode die Lichtsignalanlage 6 voraussichtlich passieren. Diese Abschnitte werden im Fahrzeug 1 von der Ermittlungseinheit 4 berechnet. Dabei werden die von der Lichtsignalanlage 6 übertragenen Daten zu den Schaltzeitpunkten der Lichtsignalanlage 6, die Daten zu dem Zeitraum bis zum Zustandswechsel der jeweiligen Lichtsignalanlage 6 und die Daten zur Position, zur Geschwindigkeit und zum Abstand der anderen Fahrzeuge 10-1 bis 10-n berücksichtigt. Ferner wird eine prognostizierte Abflussgeschwindigkeit der Fahrzeuge 10-1 bis 10-n auf dem jeweiligen Fahrstreifen 8 berücksichtigt, wenn die Lichtsignalanlage 6 für diesen Fahrstreifen 8 die Durchfahrt freigegeben hat. Anhand der Darstellung der Markierungsstreifen 14-1 bis 14-3 kann der Fahrer des Fahrzeugs 1 somit die Anzahl der Durchfahrtsperioden der Lichtsignalanlage 6 erkennen, die benötigt werden, bis er die Lichtsignalanlage 6 passieren kann, wenn er den entsprechenden Fahrstreifen 8 wählt. Die Anzahl der Durchfahrtsperioden kann er dabei separat für die einzelnen Fahrstreifen 8-1 bis 8-3 erkennen. Des Weiteren kann er den weiteren Verlauf der Fahrstreifen 8-1 bis 8-3, nämlich die Fahrstreifen 9-1 bis 9-3, anhand der Grafikelemente 19-1 bis 19-3 erkennen, so dass er anhand der Anzeige in dem Anzeigebereich 12-1 den für ihn am besten geeigneten Fahrstreifen 8-1 bis 8-3 für das Passieren der Kreuzung 25 auswählen kann.

Da mittels der Kommunikationseinheit 26 der Lichtsignalanlage 6 dem Fahrzeug 1 außerdem Daten zur Verkehrssituation im Bereich B hinter der Lichtsignalanlage 6 zur Verfügung gestellt werden, kann die Ermittlungseinheit 4 des Fahrzeugs 1 einen Stau oder die Fahrzeugdichte auf den einzelnen Fahrstreifen 9-1 bis 9-3 erfassen. Die Fahrzeugdichte oder ein etwaiger Stau auf den Fahrstreifen 9-1 bis 9-3 wird dann mittels der Anzeigevorrichtung 2 im Anzeigebereich 12-1 auf den Grafikelementen 19-1 bis 19-3 durch Grafikelemente 15-1 bis 15-3 angezeigt. Der Fahrer des Fahrzeugs 1 kann auf diese Weise schnell erkennen, ob die Weiterfahrt auf einem der Fahrstreifen 8-1 bis 8-3 hinter der Lichtsignalanlage 6 bzw. hinter der Kreuzung 25 behindert ist. Auf diese Weise kann er noch besser den für ihn geeigneten Fahrstreifen 8-1 bis 8-3 frühzeitig auswählen und ansteuern.

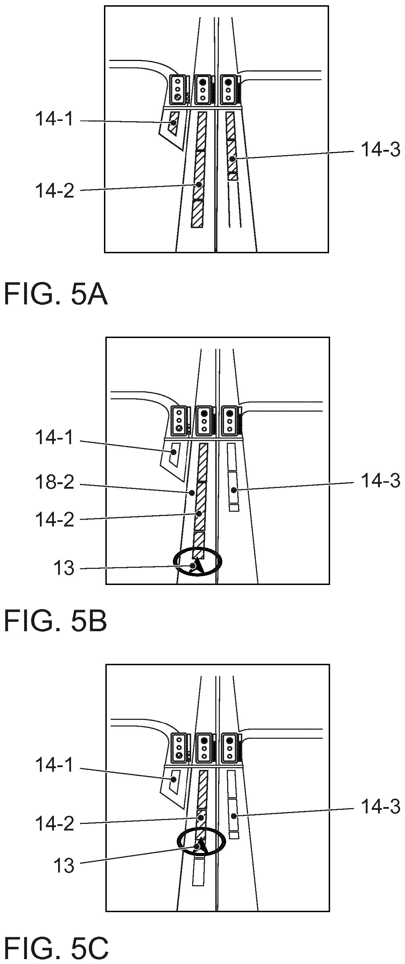

Im Folgenden wird mit Bezug zu den Figuren 5A bis 5C erläutert, wie sich die Anzeige im Anzeigebereich 12-1 der Anzeigevorrichtung 2 verändert, wenn sich das Fahrzeug 1 der Kreuzung 25 annähert:
Bevor die Grafikdaten für die Anzeige in dem Anzeigebereich 12-1 erzeugt werden, empfängt die Kommunikationseinheit 5 des Fahrzeugs 1 wie vorstehend erläutert Daten von der Kommunikationseinheit 26 der Lichtsignalanlage 6. Diese Daten werden in der Ermittlungseinheit 4 ausgewertet. Dabei wird der Abstand des Fahrzeugs 1 von der Haltelinie 7 der Lichtsignalanlage 6, der Abstand des Fahrzeugs 1 von dem Bereich A in Fahrtrichtung vor der Haltelinie 7 und der Abstand eines durch andere Fahrzeuge 10 verursachten Staus im Bereich C (Fig. 3) auf einem der Fahrstreifen 8-1 bis 8-3 erfasst. Wenn der Abstand D (Fig. 3) von dem Ende eines Staus im Bereich C einen Grenzwert unterschritten hat, wird die in Figur 5A gezeigte Anzeige im Anzeigebereich 12-1 wiedergegeben. Wenn kein Stau ermittelt worden ist oder der Stau nur sehr kurz ist, wird die in Figur 5A wiedergegebene Anzeige in jedem Fall wiedergegeben, wenn der Abstand E (Fig. 3) des Fahrzeugs 1 von der Haltelinie 7 einen weiteren Grenzwert unterschritten hat. Die Grenzwerte sind dabei so gewählt, dass der Fahrer des Fahrzeugs 1 rechtzeitig bevor er die Haltelinie 7 oder bevor er das Ende eines Staus vor der Haltelinie 7 erreicht, anhand der Anzeige im Anzeigebereich 12-1 der Anzeigevorrichtung 2 die Verkehrssituation im Umfeld der Kreuzung 25 wahrnehmen und gegebenenfalls einen Wechsel des Fahrstreifens 8 durchführen kann.

Wie in Figur 5A gezeigt, wird anhand der Markierungsstreifen 14-1 bis 14-3 dargestellt, wie lange ein Stau auf dem jeweiligen Fahrstreifen 8-1 bis 8-3 ist. Ferner wird die Anzahl der Durchfahrtsperioden der Lichtsignalanlage 6 durch Abschnitte auf den Markierungsstreifen 14-1 bis 14-3 visualisiert.

Mit der Annäherung des Fahrzeugs 1 an die Kreuzung 25 wird eine Zuordnung des Fahrzeugs 1 zu einem der Fahrstreifen 8-1 bis 8-3 durchgeführt. Wenn das Fahrzeug 1 kurz vor dem Ende eines durch andere Fahrzeuge 10 verursachten Staus vor der Lichtsignalanlage 6 ist, wird das Grafikelement 13 auf demjenigen Grafikelement 18-2 angezeigt, das dem Fahrstreifen 8-2 zugeordnet ist, auf dem sich das Fahrzeug 1 befindet. Gleichzeitig wird derjenige Markierungsstreifen 14-2 gegenüber den anderen Markierungsstreifen 14-1, 14-3 hervorgehoben dargestellt, welcher dem Fahrstreifen 8-2 entspricht, auf dem sich das Fahrzeug 1 befindet.

Wenn sich nun die Zustände der Lichtsignalanlage 6 verändern und andere Fahrzeuge 10 die Kreuzung 25 passieren, verringert sich der Abstand des Fahrzeugs 1 von der Haltelinie 7 der Lichtsignalanlage 6. Diese Positionsveränderung wird durch Vorrücken des Grafikelements 13 für das Fahrzeug 1 innerhalb des Markierungsstreifens 14-2 visualisiert, wie in Fig. 5C gezeigt.

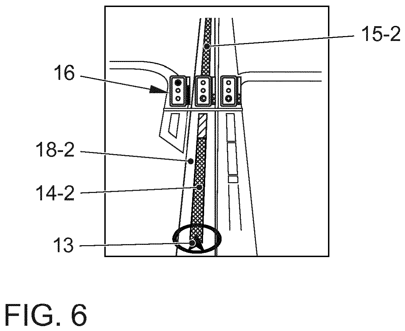

In Figur 6 ist eine Anzeige im Anzeigebereich 12-1 der Anzeigevorrichtung 2 dargestellt, welche insbesondere dann erzeugt wird, wenn kein Stau auf einem der Fahrstreifen ermittelt worden ist. In dem in Figur 6 gezeigten Fall wurde beispielsweise kein Stau auf demjenigen Fahrstreifen 8-2 ermittelt, auf dem sich das Fahrzeug 1 befindet. Auf dem entsprechenden Grafikelement 18-2 wird in diesem Fall ein grün gefärbter Markierungsstreifen 14-2 vor dem Grafikelement 16 für die Lichtsignalanlage 6 angezeigt. Des Weiteren wird das Grafikelement 13 für das Fahrzeug 1 relativ zu diesem Markierungsstreifen 14-2 dargestellt. Der Markierungsstreifen 14-2 signalisiert in diesem Fall eine Durchfahrtsphase oder Grünphase der Lichtsignalanlage 6. Befindet sich das Grafikelement 13 für das Fahrzeug 1 innerhalb des Markierungsstreifens 14-2, wird das Fahrzeug 1 die Kreuzung 25 innerhalb der aktuellen oder der nächsten Durchfahrtsphase der Lichtsignalanlage 6 passieren können. Des Weiteren wird für diesen Fahrstreifen 8-2 auch perspektivisch hinter dem Grafikelement 16 für die Lichtsignalanlage 6 ein Markierungsstreifen 15-2 mit einer Farbcodierung wiedergegeben. Ist auch dieser Markierungsstreifen 15-2 in grün angezeigt, bedeutet dies, dass auf dem entsprechenden Fahrstreifen 9-2 hinter der Lichtsignalanlage 6 die Weiterfahrt nicht behindert ist. Wird dieser Markierungsstreifen 15-2 in rot angezeigt, wird dem Fahrer des Fahrzeugs signalisiert, dass die Weiterfahrt auf dem Fahrstreifen 9-2 behindert ist.

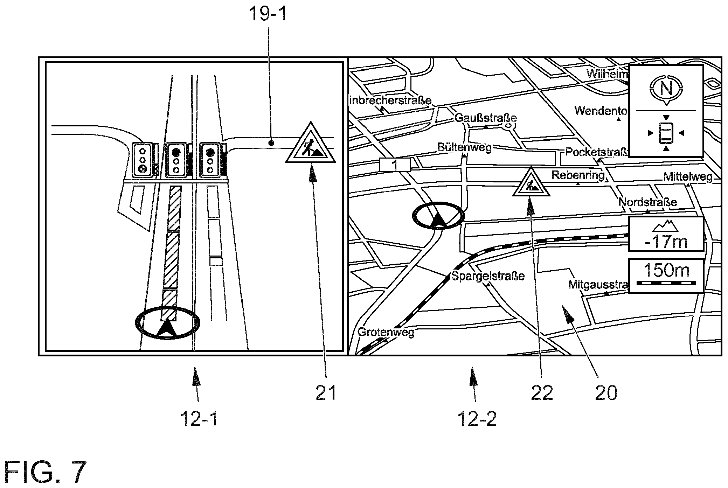

In Figur 7 ist eine Verkehrssituation im Umfeld der Kreuzung 25 gezeigt, bei welcher eine Baustelle auf dem Fahrstreifen 9-1 den Verkehr behindert. Diese Baustelle wird durch das Grafikelement 22 in der geographischen Karte 20 im Anzeigebereich 12-2 der Anzeigevorrichtung 2 dargestellt. Gleichermaßen wird diese Baustelle jedoch auch durch das Grafikelement 21 im Anzeigebereich 12-1 der Anzeigevorrichtung 2 auf dem Grafikelement 19-1 für den Fahrstreifen 9-1 dargestellt. Der Fahrer des Fahrzeugs 1 kann somit schnell und intuitiv erkennen, dass nach einem Rechtsabbiegen bei der Kreuzung 25 eine Verkehrsbehinderung durch eine Baustelle auftritt.

Schließlich kann bei dem erfindungsgemäßen Verfahren die Kommunikationseinheit 5 des Fahrzeugs 1 Daten zu einer Fahrtroute eines vorfahrtsberechtigten Einsatzfahrzeugs, wie einem Krankenwagen, empfangen. Die Ermittlungseinheit 4 kann in diesem Fall ermitteln, ob die empfangene Fahrtroute des Einsatzfahrzeugs die Kreuzung 25 passiert. Des Weiteren kann die Ermittlungseinheit 4 ermitteln, wie die Fahrtroute des Einsatzfahrzeugs über die Kreuzung 25 verläuft. Es werden dann weitere Grafikdaten in Abhängigkeit von der empfangenen Fahrtroute des Einsatzfahrzeugs erzeugt und wie in den Figuren 8A bis 8C auf der Anzeigevorrichtung 2 des Fahrzeugs 1 angezeigt.

Anhand der Grafikelemente 24 ist für den Fahrer des Fahrzeugs 1 die Fahrtroute des Einsatzfahrzeugs im Bereich der Kreuzung 25 erkennbar. Dabei wird die aktuelle Position des Einsatzfahrzeugs durch das Grafikelement 23 in der Anzeige der Anzeigevorrichtung 2 dargestellt. In Figur 8A ist eine Verkehrssituation gezeigt, bei welcher sich das Einsatzfahrzeug von hinten auf der Fahrspur des Fahrzeugs 1 der Kreuzung 25 annähert und dann bei der Kreuzung 25 rechts abbiegt. In Figur 8B ist die Verkehrssituation gezeigt, bei welcher aus Sicht des Fahrzeugs 1 das Einsatzfahrzeug sich von links der Kreuzung 25 annähert, um diese dann geradeaus zu überqueren. In Figur 8C ist die Verkehrssituation gezeigt, bei welcher das Einsatzfahrzeug aus der Gegenrichtung sich der Kreuzung 25 annähert und geradeaus über die Kreuzung 25 fährt.

Der Fahrer des Fahrzeugs 1 kann durch diese Darstellung sehr einfach und schnell erkennen, dass in den Verkehrssituationen, die in den Figuren 8A und 8B gezeigt werden, die Fahrtroute des Einsatzfahrzeugs in Konflikt mit der Fahrtroute des Fahrzeugs 1 steht, wohingegen ein solcher Konflikt bei der Verkehrssituation, die in Figur 8C gezeigt ist, nicht besteht.

### Bezugszeichenliste

- 1: Fahrzeug
- 2: Anzeigevorrichtung
- 3: Steuervorrichtung
- 4: Ermittlungseinheit
- 5: Kommunikationseinheit
- 6: Lichtsignalanlage
- 7: Haltelinie
- 8, 8-1, 8-2, 8-3: Fahrstreifen
- 9, 9-1, 9-2, 9-3: Fahrstreifen hinter der Lichtsignalanlage
- 10, 10-1, ..., 10-n: andere Fahrzeuge
- 11: Sensorvorrichtung
- 12-1, 12-2: Anzeigebereiche
- 13: Grafikelement für Fahrzeug 1
- 14-1, 14-2, 14-3: Markierungsstreifen
- 15-1, 15-2, 15-3: Markierungsstreifen
- 16: Grafikelement für Lichtsignalanlage 6
- 17: Grafikelement
- 18-1, 18-2, 18-3: Grafikelement für Fahrstreifen 8
- 19-1, 19-2, 19-3: Grafikelement für Fahrstreifen 9
- 20: Geographische Karte
- 21: Grafikelement
- 22: Grafikelement
- 23: Grafikelement
- 24: Grafikelement
- 25: Kreuzung
- 26: Kommunikationseinheit

## Patentansprüche

1. Verfahren zum Bereitstellen von Informationen in einem Fahrzeug (1) zu einer Verkehrssituation im Umfeld einer Kreuzung (25) mit mindestens einer Lichtsignalanlage (6), auf die mehrere Fahrstreifen (8) zuführen, bei dem
erste Daten zu Schaltzeitpunkten der Lichtsignalanlage (6) von dem Fahrzeug (1) ermittelt werden,
zweite Daten zur Verkehrssituation auf den Fahrstreifen (8) im Umfeld der Kreuzung (25) von dem Fahrzeug (1) ermittelt werden,
in Abhängigkeit von den ermittelten ersten und zweiten Daten Grafikdaten erzeugt und in dem Fahrzeug (1) angezeigt werden, welche die Länge eines Staus vor der Lichtsignalanlage (6) in Fahrtrichtung des Fahrzeugs (1) separat für die Fahrstreifen (8) und den aktuellen Status der Lichtsignalanlage (6) für die Fahrstreifen (8) darstellen **dadurch gekennzeichnet, dass**
erfasst wird, auf welchem Fahrstreifen (8) sich das Fahrzeug (1) befindet und,
wenn der Abstand des Fahrzeugs (1) von dem Beginn eines Staus in Fahrtrichtung des Fahrzeugs (1) auf einem der Fahrstreifen (8) oder auf dem Fahrstreifen (8), auf dem sich das Fahrzeug (1) befindet, einen ersten Grenzwert unterschritten hat, die Grafikdaten zur Länge des Staus vor der Lichtsignalanlage (6) den Fahrstreifen (8) hervorheben, auf welchem sich das Fahrzeug (1) befindet,
wobei der Grenzwert dabei so gewählt wird, dass der Fahrer des Fahrzeugs (1) rechtzeitig bevor er das Ende des Staus erreicht, anhand der Grafikdaten die Verkehrssituation im Umfeld der Kreuzung (25) wahrnehmen und gegebenenfalls einen Wechsel des Fahrstreifens (8) durchführen kann.

2. Verfahren nach Anspruch 1,
**dadurch gekennzeichnet, dass**
in Abhängigkeit von der aktuellen Position und Fahrtrichtung des Fahrzeugs (1) relativ zur Lichtsignalanlage (6) im Umfeld der Kreuzung (25) bestimmt wird, welche Fahrstreifen (8) von dem Fahrzeug (1) befahren werden dürfen, und
von den Grafikdaten ausschließlich die Fahrstreifen (8) dargestellt werden, welche das Fahrzeug (1) befahren darf.

3. Verfahren nach Anspruch 1 oder 2,
**dadurch gekennzeichnet, dass**
die zweiten Daten zur Verkehrssituation auf den Fahrstreifen (8) im Umfeld der Kreuzung (25) dritte Daten zu anderen Fahrzeugen (10) umfassen, die sich zwischen der Position des Fahrzeugs (1) und der Lichtsignalanlage (6) befinden,
aus den ersten Daten zu den Schaltzeitpunkten der Lichtsignalanlage (6) und den dritten Daten zu anderen Fahrzeugen (10) die Anzahl der Durchfahrtsperioden der Lichtsignalanlage (6) berechnet wird, die erforderlich ist, bis das Fahrzeug (1) die Lichtsignalanlage (6) voraussichtlich passieren kann, und
die berechnete Anzahl der Durchfahrtsperioden mittels der Grafikdaten angezeigt wird.

4. Verfahren nach einem der vorhergehenden Ansprüche,
**dadurch gekennzeichnet, dass**
für die Länge des Staus vor der Lichtsignalanlage (6) für zumindest einen Fahrstreifen (8) berechnet wird, welche Fahrzeuge (1) auf diesem Fahrstreifen (8) innerhalb derselben Durchfahrtsperiode die Lichtsignalanlage (6) voraussichtlich passieren.

5. Verfahren nach Anspruch 4,
**dadurch gekennzeichnet, dass**
die Berechnung, welche Fahrzeuge (1) auf einem Fahrstreifen (8) innerhalb derselben Durchfahrtsperiode die Lichtsignalanlage (6) voraussichtlich passieren, in Abhängigkeit von den Schaltzeitpunkten der Lichtsignalanlage (6) für diesen Fahrstreifen (8) und von einer prognostizierten Abflussgeschwindigkeit der Fahrzeuge (1, 10) auf diesem Fahrstreifen (8) erfolgt, wenn die Lichtsignalanlage (6) die Durchfahrt freigegeben hat.

6. Verfahren nach einem der vorhergehenden Ansprüche,
**dadurch gekennzeichnet, dass**
die Länge des Staus vor der Lichtsignalanlage (6) für die Fahrstreifen (8) durch jeweils einen Markierungsstreifen (14) dargestellt wird und auf dem Markierungsstreifen (14) Abschnitte angezeigt werden, in denen Fahrzeuge (10) des jeweiligen Fahrstreifens (8) innerhalb derselben Durchfahrtsperiode die Lichtsignalanlage (6) voraussichtlich passieren.

7. Verfahren nach einem der vorhergehenden Ansprüche,
**dadurch gekennzeichnet, dass**
die Grafikdaten eine Darstellung (17) des Zeitintervalls bis zum Wechsel des Zustands der Lichtsignalanlage (6) umfassen.

8. Verfahren nach einem der vorhergehenden Ansprüche,
**dadurch gekennzeichnet, dass**
die Position des Fahrzeugs (1) relativ zu einer Haltelinie (7) der Lichtsignalanlage (6) und zu dem Beginn eines Staus auf einem Fahrstreifen (8) vor der Lichtsignalanlage (6) berechnet und mittels der Grafikdaten angezeigt wird.

9. Verfahren nach einem der vorhergehenden Ansprüche,
**dadurch gekennzeichnet, dass**
die ermittelten zweiten Daten Informationen zum Verlauf der einzelnen Fahrstreifen (9) und zu der Verkehrssituation auf den einzelnen Fahrstreifen (9) hinter der Lichtsignalanlage (6) bezüglich der Fahrtrichtung des Fahrzeugs (1) umfassen und
die Grafikdaten den Verlauf der einzelnen Fahrstreifen (9) und die Verkehrssituation auf den einzelnen Fahrstreifen (9) hinter der Lichtsignalanlage (6) bezüglich der Fahrtrichtung des Fahrzeugs (1) umfassen.

10. Verfahren nach Anspruch 9,
**dadurch gekennzeichnet, dass**
ein Stau und/oder die Fahrzeugdichte auf den einzelnen Fahrstreifen (9) hinter der Lichtsignalanlage (6) bezüglich der Fahrtrichtung des Fahrzeugs (1) erfasst und dargestellt wird.

11. Verfahren nach Anspruch 9 oder 10,
**dadurch gekennzeichnet, dass**
ein Hindernis auf einem der Fahrstreifen (9) hinter der Lichtsignalanlage (6) bezüglich der Fahrtrichtung des Fahrzeugs (1) erfasst und dargestellt wird.

12. Verfahren nach einem der vorhergehenden Ansprüche,
**dadurch gekennzeichnet, dass**
eine geographische Karte (20) mit der Position des Fahrzeugs (1) angezeigt wird,
eine Annäherung des Fahrzeugs (1) an die Lichtsignalanlage (6) detektiert wird und
die Grafikdaten zusätzlich zu der geographischen Karte (20) in einem separaten Anzeigebereich (12-1) wiedergegeben werden, wenn der Abstand des Fahrzeugs (1) von einer Haltelinie (7) der Lichtsignalanlage (6) und/oder von dem Beginn eines Staus auf einem der Fahrstreifen (8) einen zweiten Grenzwert unterschritten hat.

13. Verfahren nach einem der vorhergehenden Ansprüche,
**dadurch gekennzeichnet, dass**
vierte Daten zu einer Fahrtroute eines vorfahrtsberechtigten Einsatzfahrzeugs empfangen werden und weitere Grafikdaten in Abhängigkeit von der empfangenen Fahrtroute des Einsatzfahrzeugs erzeugt und in dem Fahrzeug (1) angezeigt werden, welche die Fahrtroute des Einsatzfahrzeugs im Bereich der Kreuzung (25) darstellen, wenn die empfangene Fahrtroute des Einsatzfahrzeugs die Kreuzung (25) passiert.

14. System zum Bereitstellen von Informationen in einem Fahrzeug (1) zu einer Verkehrssituation im Umfeld einer Kreuzung (25) mit mindestens einer Lichtsignalanlage (6), auf die mehrere Fahrstreifen (8) zuführen, mit
einer Ermittlungseinheit (4) des Fahrzeugs (1) zum Ermitteln von ersten Daten zu Schaltzeitpunkten der Lichtsignalanlage (6) und von zweiten Daten zur Verkehrssituation auf den Fahrstreifen (8) im Umfeld der Kreuzung (25),
einer mit der Ermittlungseinheit (4) verbundenen Steuervorrichtung (3), mit welcher in Abhängigkeit von den ermittelten ersten und zweiten Daten Grafikdaten erzeugbar sind, welche die Länge eines Staus vor der Lichtsignalanlage (6) in Fahrtrichtung des Fahrzeugs (1) separat für die Fahrstreifen (8) und den aktuellen Status der Lichtsignalanlage (6) für die Fahrstreifen (8) umfassen, und
einer mit der Steuervorrichtung (3) verbundenen Anzeigevorrichtung (2) zum Anzeigen der Grafikdaten in dem Fahrzeug (1),
**dadurch gekennzeichnet, dass**
erfassbar ist, auf welchem Fahrstreifen (8) sich das Fahrzeug (1) befindet und,
die Steuervorrichtung (3) eingerichtet ist, wenn der Abstand des Fahrzeugs (1) von dem Beginn eines Staus in Fahrtrichtung des Fahrzeugs (1) auf einem der Fahrstreifen (8) oder auf dem Fahrstreifen (8), auf dem sich das Fahrzeug (1) befindet, einen ersten Grenzwert unterschritten hat, die Grafikdaten zur Länge des Staus vor der Lichtsignalanlage (6) den Fahrstreifen (8) hervorheben, auf welchem sich das Fahrzeug (1) befindet,
wobei der Grenzwert dabei so gewählt wird, dass der Fahrer des Fahrzeugs (1) rechtzeitig bevor er das Ende des Staus erreicht, anhand der von der Anzeigevorrichtung (2) angezeigten Grafikdaten die Verkehrssituation im Umfeld der Kreuzung (25) wahrnehmen und gegebenenfalls einen Wechsel des Fahrstreifens (8) durchführen kann.

## Claims

1. Method for providing information in a vehicle (1) regarding a traffic situation in the surroundings of a crossing (25) having at least one light signal system (6), into which crossing a plurality of lanes (8) feed, in which
first data regarding switching points in time of the light signal system (6) are determined by the vehicle (1),
second data regarding the traffic situation in the lanes (8) in the surroundings of the crossing (25) are determined by the vehicle (1),
depending on the determined first and second data, graphic data are generated and displayed in the vehicle (1) which show the length of a traffic jam before the light signal system (6) in the direction of travel of the vehicle (1) separately for the lanes (8), and the current status of the light signal system (6) for the lanes (8)
**characterized in that**
the lane (8) in which the vehicle (1) is located is detected, and
if the distance of the vehicle (1) from the beginning of a traffic jam in the direction of travel of the vehicle (1), in one of the lanes (8) or in the lane (8) in which the vehicle (1) is located, has fallen below a limit value, the graphic data regarding the length of the traffic jam before the light signal system (6) highlight the lane (8) in which the vehicle (1) is located,
wherein the limit value is thereby selected such that the driver of the vehicle (1) can promptly perceive the traffic situation in the surroundings of the crossing (25) using the graphic data and, if necessary, perform a change of lanes (8) before reaching the end of the traffic jam.

2. Method according to claim 1,
**characterized in that**
depending on the current position and direction of travel of the vehicle (1) relative to the light signal system (6) in the surroundings of the crossing (25), the lanes (8) in which the vehicle (1) is allowed to travel are determined, and
only the lanes (8) in which the vehicle (1) is allowed to travel are shown by the graphic data.

3. Method according to claim 1 or 2,
**characterized in that**
the second data regarding the traffic situation in the lane (8) in the surroundings of the crossing (25) comprise third data regarding other vehicles (10) which are located between the position of the vehicle (1) and the light signal system (6),
the number of pass-through periods of the light signal system (6) which is required until the vehicle (1) is expected to pass through the light signal system (6) is calculated from the first data regarding the switching points in time of the light signal system (6) and the third data regarding other vehicles (10), and
the calculated number of pass-through periods is indicated by means of the graphic data.

4. Method according to one of the preceding claims,
**characterized in that**
for the length of the traffic jam before the light signal system (6) for at least one lane (8), a calculation is made as to which vehicles (1) in said lane (8) are expected to pass through the light signal system (6) within the same pass-through period.

5. Method according to claim 4,
**characterized in that**
the calculation of which vehicles (1) in a lane (8) are expected to pass through the light signal system (6) within the same pass-through period takes place depending on the switching points in time of the light signal system (6) for said lane (8) and on a predicted flow rate of the vehicles (1, 10) in said lane (8) when the light signal system (6) has allowed passage.

6. Method according to one of the preceding claims,
**characterized in that**
the length of the traffic jam before the light signal system (6) for the lanes (8) is represented by a respective marking strip (14), and segments in which vehicles (10) of the respective lane (8) are expected to pass through the light signal system (6) within the same pass-through period are displayed on the marking strip (14).

7. Method according to one of the preceding claims,
**characterized in that**
the graphic data comprise a representation (17) of the time interval until the state of the light signal system (6) changes.

8. Method according to one of the preceding claims,
**characterized in that**
the position of the vehicle (1) relative to a stop line (7) of the light signal system (6) and to the beginning of a traffic jam in a lane (8) before the light signal system (6) is calculated and displayed by means of the graphic data.

9. Method according to one of the preceding claims,
**characterized in that**
the determined second data comprise information regarding the course of the individual lines (9) and regarding the traffic situation in the individual lanes (9) after the light signal system (6), with respect to the direction of travel of the vehicle (1), and
the graphic data comprise the course of the individual lanes (9) and the traffic situation in the individual lanes (9) after the light signal system (6) with respect to the direction of travel of the vehicle (1).

10. Method according to claim 9,
**characterized in that**
a traffic jam and/or the vehicle density in the individual lanes (9) after the light signal system (6) with respect to the direction of travel of the vehicle (1) is detected and displayed.

11. Method according to claim 9 or 10,
**characterized in that**
an obstacle in one of the lanes (9) after the light signal system (6), with respect to the direction of travel of the vehicle (1), is detected and displayed.

12. Method according to one of the preceding claims,
**characterized in that**
a geographic map (20) with the position of the vehicle (1) is displayed,
an approach of the vehicle (1) to the light signal system (6) is detected, and
the graphic data are reproduced, in addition to the geographic map (20), in a separate display area (12-1) if the distance of the vehicle (1) from a stop line (7) of the light signal system (6) and/or from the beginning of a traffic jam in one of the lanes (8) has fallen below a second limit value.

13. Method according to one of the preceding claims,
**characterized in that**
fourth data regarding a travel route of an emergency vehicle with priority right of way are received, and further graphic data are generated and displayed in the vehicle (1) depending on the received travel route of the emergency vehicle and show the travel route of the emergency vehicle in the region of the crossing (25) if the received travel route of the emergency vehicle passes through the crossing (25).

14. System for providing information in a vehicle (1) regarding a traffic situation in the surroundings of a crossing (25) having at least one light signal system (6), into which crossing a plurality of lanes (8) feed, comprising
a determination unit (4) of the vehicle (1) for determining first data regarding switching points in time of the light signal system (6) and second data regarding the traffic situation in the lanes (8) in the surroundings of the crossing (25),
a control device (3) which is connected to the determination unit (4), with which graphic data can be generated depending on the determined first and second data, which graphic data comprise the length of a traffic jam before the light signal system (6) in the direction of travel of the vehicle (1) separately for the lanes (8), and the current status of the light signal system (6) for the lanes (8), and
a display device (2) for displaying the graphic data in the vehicle (1), which display device (2) is connected to the control device (3), **cha**
**racterized in that**
the lane (8) in which the vehicle (1) is located can be detected, and
if the distance of the vehicle (1) from the beginning of a traffic jam in the direction of travel of the vehicle (1) in one of the lanes (8), or in the lane (8) in which the vehicle (1) is located, has fallen below a limit value, the control device (3) is configured to emphasize the graphic data regarding the length of the traffic jam before the light signal system (6) the lane (8) in which the vehicle (1) is located,
wherein the limit value is selected such that the driver of the vehicle (1) can promptly perceive the traffic situation in the surroundings of the crossing (25) using the graphic data displayed by the display device (2) and, if necessary, perform a change of lanes (8) before reaching the end of the traffic jam.

## Revendications

1. Procédé de préparation d'informations dans un véhicule (1) concernant une situation de trafic dans l'environnement d'un croisement (25) comprenant au moins une installation de feux de circulation (6), vers laquelle mènent plusieurs voies de circulation (8), dans lequel
des premières données concernant des moments de commutation de l'installation de feux de circulation (6) sont déterminées par le véhicule (1),
des deuxièmes données concernant la situation de trafic dans les voies de circulation (8) dans l'environnement du croisement (25) sont déterminées par le véhicule (1),
en fonction des premières et deuxièmes données déterminées des données graphiques sont générées et affichées dans le véhicule (1), lesquelles représentent la longueur d'un embouteillage devant l'installation de feux de circulation (6) dans la direction de déplacement du véhicule (1) séparément pour les voies de circulation (8) et le statut actuel de l'installation de feux de circulation (6) pour les voies de circulation (8)
**caractérisé en ce que**
la voie de circulation (8) dans laquelle se trouve le véhicule (1) est détectée et,
lorsque la distance du véhicule (1) du début d'un embouteillage dans la direction de déplacement du véhicule (1) dans une des voies de circulation (8) ou dans la voie de circulation (8) dans laquelle se trouve le véhicule (1) est tombée en dessous d'une première valeur limite, les données graphiques concernant la longueur de l'embouteillage devant l'installation de feux de circulation (6) mettent en avant la voie de circulation (8) sur laquelle se trouve le véhicule (1),
la valeur limite étant sélectionnée de telle façon que le conducteur du véhicule (1) peut percevoir à temps, avant d'atteindre la fin de l'embouteillage, au moyen des données graphiques, la situation de trafic dans l'environnement du croisement (25) et, le cas échéant, effectuer un changement de voie de circulation (8).

2. Procédé selon la revendication 1,
**caractérisé en ce que**
en fonction de la position actuelle et de la direction de déplacement du véhicule (1) par rapport à l'installation de feux de circulation (6) dans l'environnement du croisement (25), les voies de circulation (8) dans lesquelles le véhicule (1) peut circuler sont déterminées, et
les données graphiques représentent exclusivement les voies de circulation (8) dans lesquelles le véhicule (1) peut circuler.

3. Procédé selon la revendication 1 ou 2,
**caractérisé en ce que**
les deuxièmes données concernant la situation de trafic dans les voies de circulation (8) dans l'environnement du croisement (25) comprennent des troisièmes données concernant d'autres véhicules (10), lesquels se trouvent entre la position du véhicule (1) et l'installation de feux de circulation (6),
à partir des premières données concernant les moments de commutation de l'installation de feux de circulation (6) et des troisièmes données concernant d'autres véhicules (10), le nombre des périodes de passage de l'installation de feux de circulation (6), qui est nécessaire jusqu'à ce que le véhicule (1) puisse probablement passer l'installation de feux de circulation, est calculé, et
le nombre de périodes de passage est affiché au moyen des données graphiques.

4. Procédé selon l'une quelconque des revendications précédentes,
**caractérisé en ce que**
pour la longueur de l'embouteillage devant l'installation de feux de circulation (6), il est calculé pour au moins une voie de circulation (8) quels véhicules (1) se trouvant dans cette voie de circulation (8) peuvent probablement passer l'installation de feux de circulation durant la même période de passage.

5. Procédé selon la revendication 4,
**caractérisé en ce que**
le calcul des véhicules (1) se trouvant dans cette voie de circulation (8) pouvant probablement passer l'installation de feux de circulation (6) durant la même période de passage est effectué en fonction des moments de commutation de l'installation de feux de signalisation (6) pour cette voie de circulation (8) et d'une vitesse de flux prévue des véhicules (1, 10) dans cette voie de circulation (8), lorsque l'installation de feux de circulation (6) a autorisé le passage.

6. Procédé selon l'une quelconque des revendications précédentes,
**caractérisé en ce que**
la longueur de l'embouteillage devant l'installation de feux de circulation (6) est représentée pour les voies de circulation (8) respectivement par une bande de marquage (14) et des sections sont indiquées sur la bande de marquage (14), dans lesquelles des véhicules (10) de la voie de circulation (8) respective passent probablement l'installation de feux de circulation (6) durant la même période de passage.

7. Procédé selon l'une quelconque des revendications précédentes,
**caractérisé en ce que**
les données graphiques comprennent une représentation (17) de l'intervalle de temps jusqu'au changement de l'état de l'installation de feux de circulation (6).

8. Procédé selon l'une quelconque des revendications précédentes,
**caractérisé en ce que**
la position du véhicule (1) par rapport à une ligne d'arrêt (7) de l'installation de feux de circulation (6) et au début d'un embouteillage dans une voie de circulation (8) devant l'installation de feux de circulation (6) est calculée et indiquée au moyen des données graphiques.

9. Procédé selon l'une quelconque des revendications précédentes,
**caractérisé en ce que**
les deuxièmes données déterminées comprennent des informations concernant le tracé des voies de circulation (9) individuelles et concernant la situation de trafic dans les voies de circulation (9) individuelles derrière l'installation de feux de circulation (6) par rapport à la direction de déplacement du véhicule (1) et
les données graphiques comprennent le tracé des voies de circulation (9) individuelles et la situation de trafic dans les voies de circulation (9) individuelles derrière l'installation de feux de circulation (6) par rapport à la direction de déplacement du véhicule (1).

10. Procédé selon la revendication 9,
**caractérisé en ce que**
un embouteillage et/ou la densité en véhicules dans les voies de circulation (9) individuelles derrière l'installation de feux de circulation (6) par rapport à la direction de déplacement du véhicule (1) sont détectés et affichés.

11. Procédé selon la revendication 9 ou 10,
**caractérisé en ce que**
un obstacle sur une des voies de circulation (9) individuelles derrière l'installation de feux de circulation (6) par rapport à la direction de déplacement du véhicule (1) est détecté et affiché.

12. Procédé selon l'une quelconque des revendications précédentes,
**caractérisé en ce que**
une carte géographique (20) comprenant la position du véhicule (1) est affichée,
un rapprochement du véhicule (1) à l'installation de feux de circulation (6) est détecté et
les données graphiques sont reproduites en plus de la carte géographique (20) dans une zone d'affichage (12-1) séparée, lorsque la distance du véhicule (1) d'une ligne d'arrêt (7) de l'installation de feux de circulation (6) et/ou du début d'un embouteillage dans une des voies de circulation (8) tombe en dessous d'une deuxième valeur limite.

13. Procédé selon l'une quelconque des revendications précédentes,
**caractérisé en ce que**
des quatrièmes données concernant un itinéraire d'un véhicule d'intervention ayant priorité sont reçues et d'autres données graphiques sont générées en fonction de l'itinéraire du véhicule d'intervention reçu et sont affichées dans le véhicule (1), lesquelles représentent l'itinéraire du véhicule d'intervention dans la zone du croisement (25), lorsque l'itinéraire reçu du véhicule d'intervention passe par le croisement (25).

14. Système de préparation d'informations dans un véhicule (1) concernant une situation de trafic dans l'environnement d'un croisement (25) comprenant au moins une installation de feux de circulation (6), vers laquelle mènent plusieurs voies de circulation (8), comprenant
une unité de détermination (4) du véhicule (1) pour la détermination de premières données concernant des moments de commutation de l'installation de feux de circulation (6) et de deuxièmes données concernant la situation de trafic dans les voies de circulation (8) dans l'environnement du croisement (25),
un dispositif de commande (3) connecté à l'unité de détermination (4), au moyen duquel, en fonction des premières et deuxièmes données déterminées, des données graphiques peuvent être générées, lesquelles comprennent la longueur d'un embouteillage devant l'installation de feux de circulation (6) dans la direction de déplacement du véhicule (1) séparée pour les voies de circulation (8) et le statut actuel de l'installation de feux de circulation (6) pour les voies de circulation (8), et
un dispositif d'affichage (2) connecté au dispositif de commande (3) pour l'affichage des données graphiques dans le véhicule (1),
**caractérisé en ce que**
la voie de circulation (8) dans laquelle se trouve le véhicule (1) peut être détectée et,
le dispositif de commande (3) est conçu pour, lorsque la distance du véhicule (1) du début d'un embouteillage dans la direction de déplacement du véhicule (1) dans une des voies de circulation (8) ou dans la voie de circulation (8) dans laquelle se trouve le véhicule (1) est tombée en dessous d'une première valeur limite, mettre en avant les données graphiques concernant la longueur de l'embouteillage devant l'installation de feux de circulation (6) et la voie de circulation (8) dans laquelle se trouve le véhicule (1),
la valeur limite étant sélectionnée de telle façon que le conducteur du véhicule (1) peut percevoir à temps, avant d'atteindre la fin de l'embouteillage, au moyen des données graphiques affichées par le dispositif d'affichage (2) la situation de trafic dans l'environnement du croisement (25) et, le cas échéant, effectuer un changement de voie de circulation (8).
